# EUROPEAN PATENT SPECIFICATION

(11) **EP 3 355 201 B1**
(45) Date of publication and mention of the grant of the patent: **27.01.2021**
(21) Application number: 17163156.7
(22) Date of filing: 27.03.2017
(51) Int. Cl.: G06K 9/32, G06K 9/00

(54) **A METHOD AND SYSTEM FOR ESTABLISHING A RELATIONSHIP BETWEEN A PLURALITY OF USER INTERFACE ELEMENTS**
VERFAHREN UND SYSTEM ZUR HERSTELLUNG EINER BEZIEHUNG ZWISCHEN MEHREREN BENUTZEROBERFLÄCHENELEMENTEN
PROCÉDÉ ET SYSTÈME PERMETTANT D'ÉTABLIR UNE RELATION ENTRE UNE PLURALITÉ D'ÉLÉMENTS D'INTERFACE UTILISATEUR

(30) Priority: 31.01.2017 IN 201741003648
(43) Date of publication of application: 01.08.2018
(73) Proprietor: Wipro Limited, 560 035 Karnataka (IN)
(72) Inventor: VENKATARAMAN, Arthi, 560047 Bangalore (IN); VANTIGODI, Suraj, 580002 Dharwad (IN); RAO V, Raghavendra, 560084 Bangalore (IN)
(74) Representative: Finnegan Europe LLP

(56) References cited:
- WO-A1-2014/179466
- US-A1- 2016 034 441

## Description

### Technical Field

The present subject matter relates generally to image processing, and more particularly, but not exclusively to a method and a system for establishing a relationship between a plurality of User Interface (UI) elements.

### Background

Nowadays, image based User Interface (UI) automation solutions are available in the market. In any image based UI automation solution enormous effort goes in manually understanding details related to each field identified in a UI. Further, when the UI changes, an entire process of getting the details needs to be repeated. Sometimes, UI elements which are identified might be wrong or may not be accurate. This leads to further intervention of a user to manually understand the details of the UI.

Existing techniques include applications that identify a graphical user interface (GUI) element by comparing images received as input with images that are generated from data provided by the applications. The applications then provide the data that describes the GUI element as a result. The applications identify the GUI element, but do not provide any insight on the GUI element that is identified for easy understanding. Some other existing techniques include software related products that are presented for automatic testing of software products such as front-ends of computing devices. Such automatic testing solutions simplify delivery and verification of the software products and services across the computing devices and screens by comparing user interface images using image analysis. For example, a screen buffer or a visual representation of a new version of a software application can be compared with those representations generated using one or more previously released software versions of the software application. Such methods improvise scope and facilitate automation of workflows that previously required a lot of human interaction. However, the automatic testing solutions work by comparing two user interface images of a same screen but having different versions. Therefore, such solutions might not be able to perform the image analysis when a new image is provided without any pre-stored data related to the new image. US 2016/034441 A1 discloses a method to obtain a hierarchical view of a user interface.

### Summary

One or more shortcomings of the prior art may be overcome and additional advantages may be provided through the present disclosure. Additional features and advantages may be realized through the techniques of the present disclosure. The invention is defined by the independent claims. Further aspects of the invention are outlined in the dependent claims. Embodiments which do not fall within the scope of the claims do not describe part of the present invention.

Disclosed herein is a method according to claim 1 for establishing a relationship between plurality of User Interface (UI) elements.

Further, the present disclosure includes an image processing system according to claim 4 for establishing a relationship between plurality of User Interface (UI) elements.

Further, the present disclosure comprises a non-transitory computer readable medium, according to claim 5, including instructions stored thereon that when processed by at least one processor causes an image processing system to perform operations comprising the method of claims 1-3.

### Brief Description of the Accompanying Diagrams

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG. 1** shows an exemplary architecture for automatically establishing a relationship between a plurality of User Interface (UI) elements in accordance with some embodiments of the present disclosure;
**FIG. 2A** shows a detailed block diagram of an image processing system for establishing a relationship between a plurality of User Interface (UI) elements in accordance with some embodiments of the present disclosure;
**FIG. 2B****,** **FIG. 2C** and **FIG. 2D** shows exemplary input images of exemplary UI screens of an application with some embodiments of the present disclosure;
**FIG. 3** shows a flowchart illustrating a method for establishing a relationship between a plurality of User Interface (UI) elements in accordance with some embodiments of the present disclosure; and
**FIG. 4** is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

Disclosed herein is a method for establishing a relationship between a plurality of User Interface (UI) elements. The image processing system receives a plurality of input images related to one or more UI screens of an application from one or more sources. As an example, the one or more sources may include, but are not limited to, an image repository and an image capturing device such as a camera, a mobile, a tablet and the like. Upon receiving the one or more input images, the image processing system identifies the plurality of UI elements and respective positions of the plurality of UI elements in each of the input images. Further, the image processing system obtains a label corresponding to each of the plurality of UI elements in each of the input images. The image processing system obtains the label by extracting text from sub-images that are created by cropping regions of each of the plurality of UI elements. Further, the image processing system determines a level of each of the plurality of UI elements identified in each of the plurality of UI screens to automatically establish the relationship between the plurality of UI elements across the plurality of UI screens. The present disclosure provides detailed insights related to each UI element in each input image. Further, a parent-child relationship is automatically established between the plurality of UI elements in real-time, which helps in easy navigation within the UI screen and among the UI screens of the application.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

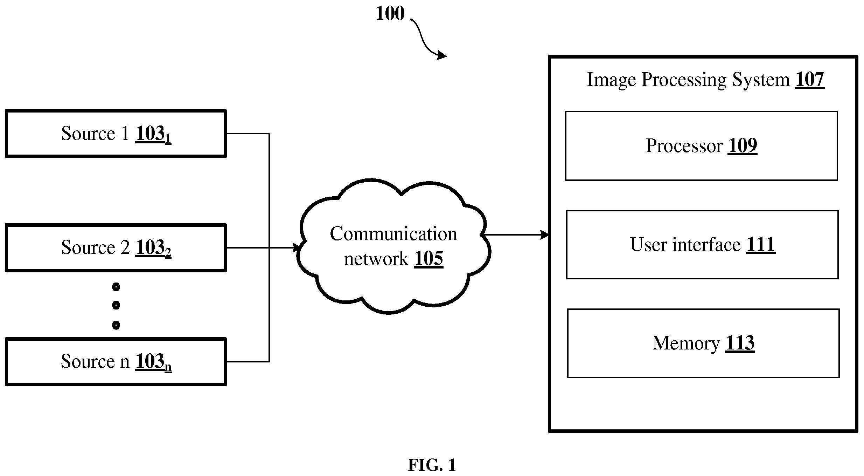

**FIG. 1** shows an exemplary architecture for establishing a relationship between a plurality of User Interface (UI) elements in accordance with some embodiments of the present disclosure.

The architecture **100** includes one or more sources, source 1 **103₁** to source n **103ₙ** (collectively referred to as one or more sources **103**), a communication network **105** and an image processing system **107.** As an example, the one or more sources **103** may include, but are not limited to, an image repository and an image capturing device such as a camera, a mobile, a tablet and the like. The image processing system **107** interacts with the one or more sources **103** via the communication network **105.** The communication network **105** may be at least one of a wired communication network and a wireless communication network.

The image processing system **107** includes a processor **109,** a user interface **111** and a memory **113.** The user interface **111** receives one or more input images related to one or more UI screens of an application from the one or more sources **103.** As an example, consider "Microsoft Outlook" is the application, the one or more input images related to one or more UI screens of "Microsoft Outlook" is received by the user interface **111.** The processor **109** identifies a plurality of UI elements present in each of the one or more input images. As an example, the plurality of UI elements may include, but not limited to, buttons, tabs, tables and text boxes. Further, the processor **109** identifies positions of the plurality of UI elements that are identified.

In an embodiment not encompassed by the claims, the positions of the plurality of UI elements may be identified by storing co-ordinates of the identified UI elements. Furthermore, the processor 109 extracts a label corresponding to each of the plurality of UI elements identified in each of the one or more input images. In an embodiment, the processor **109** obtains sub-images by cropping regions of each of the plurality of UI elements. Upon obtaining the sub-images, text is extracted from each sub-image, thereby obtaining the label corresponding to each of the plurality of UI elements. In an embodiment not encompassed by the claims, the processor **109** may extract the text from each of the one or more sub-images using a deep learning model. Upon extracting the label corresponding to each of the plurality of UI elements, the processor **109** determines a level of each of the plurality of UI elements identified in each of the one or more UI screens. The level determined for each of the plurality of UI elements automatically establishes a relationship between the plurality of UI elements across the one or more UI screens. The relationship established between the plurality of UI elements across the one or more UI screens helps in easy navigation from one UI screen to another UI screen.

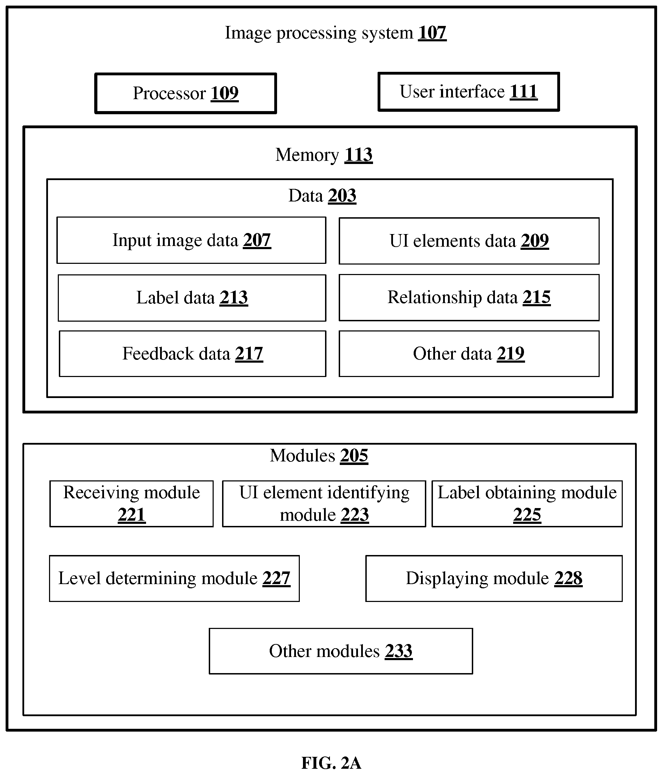

**FIG. 2A** shows a detailed block diagram of the image processing system 107 for establishing the relationship between the plurality of User Interface (UI) elements in accordance with some embodiments of the present disclosure.

In some implementations, the image processing system **107** includes data **203.** As an example, the data **203** is stored in the memory **113** configured in the image processing system **107** as shown in the **FIG. 2A****.** In one embodiment, the data **203** includes an input image data **207,** a UI elements data **209,** a label data **213,** a relationship data **215,** a feedback data **217** and other data **219.** In the illustrated **FIG. 2A****,** modules **205** are described herein in detail.

In some embodiments, the data **203** may be stored in the memory **113** in form of various data structures. Additionally, the data **203** can be organized using data models, such as relational or hierarchical data models. The other data **219** may store data, including temporary data and temporary files, generated by the modules **205** for performing the various functions of the image processing system **107.**

In some embodiments, the input image data **207** includes a plurality of input images received by the image processing system **107** from the one or more sources **103.** In some embodiments, the plurality of inputs images are related to one or more UI screens of an application.

In some embodiments, the UI elements data **209** includes the plurality of UI elements identified in each of the plurality of input images. Further, the UI elements data **209** also includes respective positions of the plurality of UI elements.

In some embodiments not encompassed by the claims, the positions of the plurality of UI elements may be identified by storing co-ordinates of the plurality of UI elements. Further, the UI elements data **209** may include sorted representation of the plurality of UI elements. In some embodiments not encompassed by the claims, a sorting pattern may include, but is not limited to, a left-to-right pattern or a top-to-bottom pattern. Each of the plurality of UI elements may include a value that indicates the respective positions in the one or more input images based on the sorting pattern.

In some embodiments, the label data **213** includes a label corresponding to each of the plurality of UI elements in each of the plurality of input images. Further, the label data **213** may include sub-images of each of the one or more input images received by the image processing system **107.** As an example, the sub-images may include, but are not limited to, header regions of the plurality of UI elements. In some embodiment, the label corresponding to each of the plurality of UI elements is extracted based on the sub-images of each of the plurality of UI elements.

In some embodiments, the relationship data **215** includes a level of each of the plurality of the UI elements identified in each of the plurality of UI screens.

The level of each of the plurality of the UI elements is a number that helps in automatically establishing a relationship between the plurality of UI elements. As an example, consider a UI element "Tab" labelled as "Address" and other UI elements that appear upon clicking the "Address" tab are UI elements "Textbox" labelled as "Street", "Pin code" and "City". Therefore, "Address" tab is considered as a parent node and the textboxes labelled as "Street", "Pin code" and "City" are considered as child nodes of the parent node "Address" tab. Therefore, level of "Address" tab may be 1 and level of each textbox labelled as "Street", "Pin code" and "City" may be 2.

In some embodiments, the feedback data **217** may include one or more user inputs received from a user associated with the image processing system **107.** In some embodiments, the one or more user inputs may be related to faults in UI element identification, semantic and grammatical errors, altering information related to the UI elements, and the like.

In some embodiments, the data stored in the memory **113** is processed by the modules **205** of the image processing system **107.** The modules **205** may be stored within the memory **113.** In an example, the modules **205** communicatively coupled to a processor **109** configured in the image processing system **107,** may also be present outside the memory **113** as shown in **FIG. 2A** and implemented as hardware. As used herein, the term modules refers to an application specific integrated circuit (ASIC), an electronic circuit, a processor (shared, dedicated, or group) and memory that execute one or more software or firmware programs, a combinational logic circuit, and/or other suitable components that provide the described functionality.

In an embodiment, the modules **205** include a receiving module **221,** a UI element identifying module **223,** a label obtaining module **225,** a level determining module **227,** a displaying module **228** and other modules **233.** The other modules **233** may be used to perform various miscellaneous functionalities of the image processing system **107.** It will be appreciated that such aforementioned modules **205** may be represented as a single module or a combination of different modules.

In some embodiments, the receiving module **221** receives the plurality of input images related to the plurality of UI screens of the application from the one or more sources **103.**

In some embodiments, the UI element identifying module **223** identifies the plurality of UI elements from the plurality of input images. As an example, the plurality of UI elements may include, but not limited to, buttons, tabs, tables and text boxes. The UI element identifying module **223** identifies the plurality of UI elements using one or more methods as illustrated below.

### Method- 1

In this method, the UI element identifying module **223** may identify the plurality of UI elements based on shape of the plurality of UI elements. Majority of the plurality of UI elements are generally rectangular. Therefore, the UI element identifying module **223** may identify rectangular patterns present in each of the one or more input images as the plurality of UI elements. The processor **109** may be configured to identify other patterns in each of the one or more input images such as a square pattern, a circular pattern, an oval pattern and the like. The one or more input images are initially converted into gray scale and further a filter such as a Laplacian filter may be applied on each of the one or more input images converted into the gray scale to identify the plurality of UI elements. Further, the UI element identifying module **223** also identifies respective positions of the UI elements by recording co-ordinates of each of the plurality of UI elements in each of the one or more input images.

### Method- 2

In this method, the UI element identifying module **223** may execute a predefined algorithm such as a convolutional neural network algorithm. The predefined algorithm is trained with standard images of different UI elements. Therefore, the UI element identifying module **223** automatically identifies the plurality of UI elements using the predefined algorithm. Further, the UI element identifying module **223** also identifies respective positions of the UI elements by recording the co-ordinates of each of the plurality of UI elements in each of the one or more input images.

### Method-3

In this method, the UI element identifying module **223** may recognize one or more user inputs received by manual intervention. A user associated with the image processing system **107** performs one or more actions through input devices such as a mouse, a keyboard etc. The user selects the UI element on a user interface **111** associated with the image processing system **107** and then performs "click" and "drag" action on the UI element. The UI element identifying module **223** records the start and end co-ordinates of the "click" and "drag" action. The start and end co-ordinates indicate position of the UI element. The user may provide one or more user inputs for rectifying faults in the UI element identification, for rectifying semantic and grammatical errors and for altering information related to the UI elements.

In some embodiments, the label obtaining module **225** obtains the label corresponding to each of the plurality of UI elements identified by the UI element identifying module **223.** The label obtaining module **225** initially obtains sub-images of each of the one or more input images by cropping regions of each of the plurality of UI elements. Upon obtaining the sub-images, the label obtaining module **225** extracts text from each sub-image to obtain the label corresponding to each of the plurality of UI elements. The label obtaining module **225** may extract the text from each of the one or more sub-images using a deep learning model. As an example, consider a UI element "Tab" labelled as "Address". The label obtaining module **225** obtains the sub image of the UI element by cropping the region comprising the label of the UI element. Upon obtaining the sub-image, the label obtaining module **225** provides the sub-image to the deep learning model to extract text from the sub-image and obtain the label corresponding to the UI element as "Address".

In some embodiments, the level determining module **227** determines a level of each of the plurality of UI elements. The level determining module **227** initially sorts each of the plurality of UI elements identified in each of the one or more UI screens based on the respective positions. In some embodiments, the sorting pattern may include, but not limited to, a Left-to-right pattern or a Top-to-bottom pattern. Sorting brings out relativity among the respective positions of each of the plurality of UI elements. The level determining module **227** assigns a value to each of the plurality of UI elements that indicates the respective positions in each of the one or more input images based on the sorting. As an example, consider a command that reads "GOTO UI element 7". In the above example, 7 is the value assigned by the level determining module **227** to the UI element upon sorting. The value 7 indicates the respective position of the UI element. This command can be easily performed since each of the plurality of UI elements are assigned with the value indicating the respective position in each of the one or more input images. Upon sorting, the level determining module **227** identifies a common label in the one or more UI screens. In some embodiments, the plurality of UI elements in each of the one or more input images are considered as child nodes of the window name of the corresponding input image. Further, the label obtained for a particular UI element in one of the one or more input images may be the same for that UI element in each of the one or more input images. Furthermore, the level determining module **227** associates the plurality of UI elements present in the one or more UI screens based on the common label. Upon associating the plurality of UI elements, the level determining module **227** assigns a number to each of the plurality of UI elements based on the association. In some embodiments, the number assigned to each of the plurality of UI elements indicates the level of each of the plurality of UI elements, thereby establishing the relationship between the plurality of UI elements automatically. In some embodiments, the UI element "Tab" is considered as one level higher than the rest of the plurality of UI elements.

In some embodiments, the displaying module **228** displays results that may include the plurality of UI elements, the respective positions of the plurality of UI elements, the label corresponding to each of the plurality of UI elements and the level of each of the plurality of UI elements on the user interface **111** associated with the image processing system **107.** In some embodiments, the displaying module **228** displays the results at any given point of time on demand of the user. Upon displaying the results, if the user believes that the result needs rectification, the user may provide the one or more user inputs and the result may be updated dynamically. In some embodiments, updating the result may include overriding the result with the one or more user inputs to obtain a new result. Further, the processor **109** is dynamically trained based on the one or more user inputs.

Henceforth, the process of automatically establishing a relationship between the plurality of UI elements is explained with the help of one or more examples for better understanding of the present disclosure. However, the one or more examples should not be considered as limitation of the present disclosure.

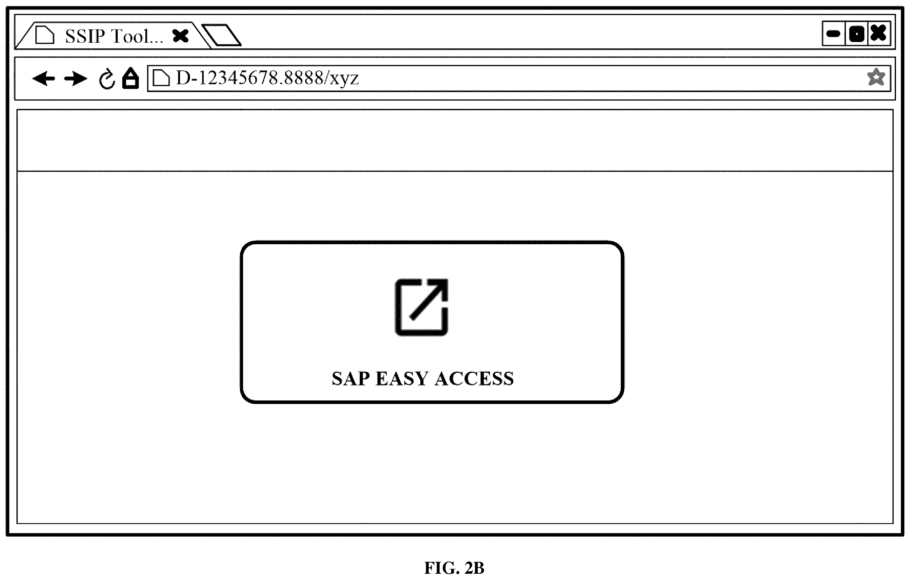

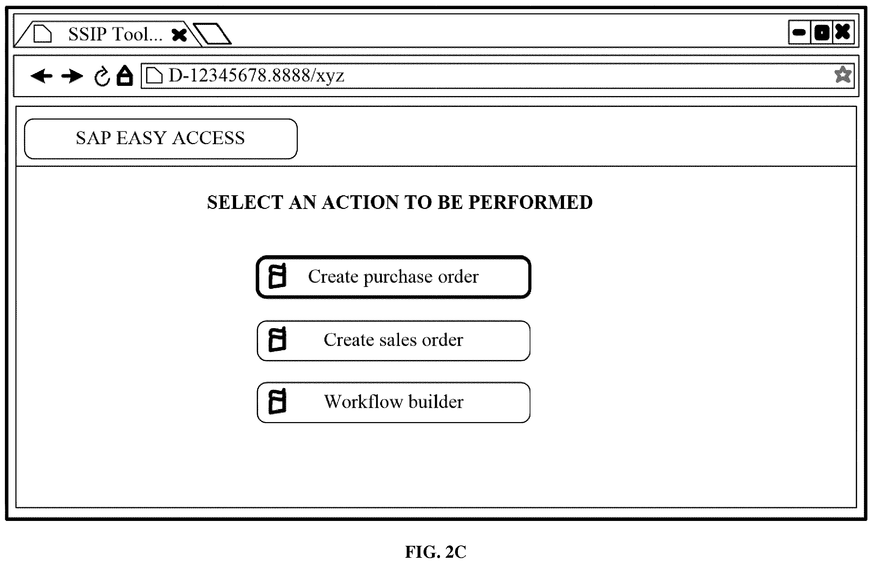

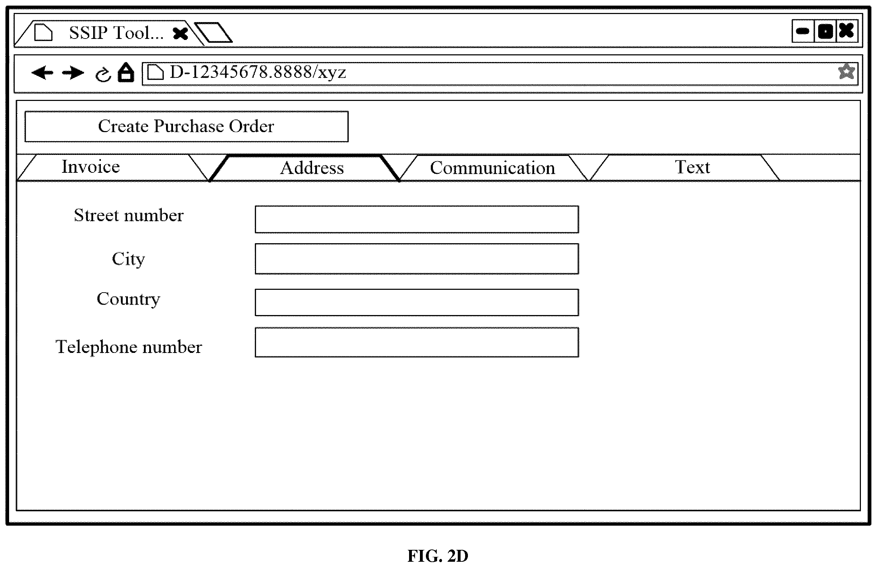

Consider a scenario related to an application as shown in **FIG. 2B****,** **FIG. 2C** and **FIG. 2D****.** Also, consider that **FIG. 2B** is an input image 1 of UI screen 1, **FIG. 2C** is an input image 2 of UI screen 2 and **FIG. 2D** is an input image 3 of UI screen 3. The input image 1 of the UI screen 1, the input image 2 of the UI screen 2 and the input image 3 of the UI screen 3 are provided as input to the image processing system **107.** Upon receiving the input images, the processor **109** identifies UI elements in each of the input images based on at least one of the method 1, method 2 or method 3 as described in the above modules. The processor **109** identifies a UI element "button" labelled as "SAP EASY ACCESS" in the input image 1 of UI screen 1. Further, the processor **109** identifies 3 UI elements "buttons" labelled as "Create purchase order", "Create sales order" and "Workflow builder" in the input image 2 of UI screen 2. Furthermore, the processor **109** identifies UI element "Tab" labelled as "Address" in the input image 3 of UI screen 3. Further, the processor **109** identifies UI elements "Textbox" labelled as "Street number", "City", "Country" and "Telephone number" that are appear below the UI element "Tab" labelled as "Address". Upon identifying the plurality of UI elements in each of the input images, the processor **109** obtains sub-images of the input image 1, input image 2 and input image 3 by cropping regions of the input image 1, input image 2 and input image 3. The processor **109** extracts text from each sub-image to obtain the label corresponding to each of the plurality of UI elements identified in each of the input images. Upon extracting the label corresponding to each of the plurality of UI elements, the processor **109** displays the plurality of UI elements and information related to the plurality of UI elements as shown in the below **Table 1.**

**Table 1**

| **UI element** | **Extracted Text** | **Label** | **Level** | **Modified text** |
|---|---|---|---|---|
| Button | SAP EASY ACCESS | SAP EASY ACCESS | 0 | SAP EASY ACCESS |
| Button | Create purchase order | Create purchase order | 0 | Create purchase order |
| Button | Create Sales order | Create Sales order | 0 | Create Sales order |
| **Button** | **Wo rkflow Buiider** | **Wo rkflow Buiider** | **0** | **Wo rkflow Buiider** |
| Tab | Address | Address | 0 | Address |
| Textbox | Street Number | Street Number | 0 | Street Number |
| Textbox | City | City | 0 | City |
| Textbox | Country | Country | 0 | Country |
| Textbox | Telephone number | Telephone number | 0 | Telephone number |

Upon displaying the **Table 1,** the user may provide one or more inputs if required. As an example, in the above **Table 1,** the label obtained for the UI element "Button" labelled as "Workflow builder" is not correct. Therefore, the user provides one or more user inputs to correct the extracted text and thereby updates the one or more user inputs dynamically. In the above **Table 1,** current data in the column "modified text" may be same as the obtained label for the corresponding UI element by default. If the user provides the one or more user inputs to perform a few corrections, the one or more user inputs overrides the current data present in the column "modified text" and the label obtained is corrected based on the one or more user inputs. The updated data is as shown in the below **Table 2.**

**Table 2**

| **UI element** | **Extracted Text** | **Label** | **Level** | **Modified text** |
|---|---|---|---|---|
| Button | SAP EASY ACCESS | SAP EASY ACCESS | 0 | SAP EASY ACCESS |
| Button | Create purchase order | Create purchase order | 0 | Create purchase order |
| Button | Create Sales order | Create Sales order | 0 | Create Sales order |
| Button | **Workflow Builder** | **Workflow Builder** | 0 | **Workflow Builder** |
| Tab | Address | Address | 0 | Address |
| Textbox | Street Number | Street Number | 0 | Street Number |
| Textbox | City | City | 0 | City |
| Textbox | Country | Country | 0 | Country |
| Textbox | Telephone number | Telephone number | 0 | Telephone number |

Further, the processor **109** dynamically gets trained based on the one or more user inputs. Thereafter, the processor **109** may extract the text correctly as "workflow builder" and not as "wo rkflow Buiider". The user may view the plurality of UI elements and related information as per requirement and provide one or more user inputs. Further, the processor **109** may determine a level of each of the plurality of UI elements identified in each of the input images. The processor **109** identifies the UI element "Button" labelled as "SAP EASY ACCESS" as a common label among the input image 1 of the UI screen 1, the input image 2 of the UI screen 2 and the input image 3 of the UI screen 3. Further, the processor **109** may identify the UI element "Button" labelled as "Create purchase order" as a common label among the input image 2 of the UI screen 2 and the input image 3 of the UI screen 3. Therefore, the processor **109** associates the UI element "Button" labelled as "SAP EASY ACCESS" and the UI element "Button" labelled as "Create purchase order" by assigning a number to each of the identified UI elements. The UI element "Button" labelled as "SAP EASY ACCESS" may be assigned with number "1" and the UI element "Button" labelled as "Create purchase order" may be numbered as "2". The assigned numbers indicate the level of the UI elements. Therefore, based on the level, the UI element "Button" labelled as "SAP EASY ACCESS" is considered as parent node of the UI element "Button" labelled as "Create purchase order". Similarly, the level is determined for the other UI elements "Tab" and "Textbox" identified in input image 2 of UI screen 2 and the input image 3 of the UI screen 3. The parent-child relationship between the plurality of UI elements based on the determined level is as shown in the below **Table 3.**

**Table 3**

| **UI element** | **Extracted Text** | **Label** | **Level** | **Modified text** | **Parent level** | **Parent name** |
|---|---|---|---|---|---|---|
| Button | SAP EASY ACCESS | SAP EASY ACCESS | 1 | SAP EASY ACCESS | 0 | SAP EASY ACCESS |
| Button | Create purchase order | Create purchase order | 2 | Create purchase order | 1 | SAP EASY ACCESS |
| Tab | Address | Address | 3 | Address | 2 | Create purchase order |
| Textbox | Street Number | Street Number | 4 | Street Number | 3 | Address |
| Textbox | City | City | 4 | City | 3 | Address |
| Textbox | Country | Country | 4 | Country | 3 | Address |
| Textbox | Telephone number | Telephone number | 4 | Telephone number | 3 | Address |

Therefore, the processor **109** establishes a relationship between the plurality of UI elements within the UI screen as well as among the UI screens.

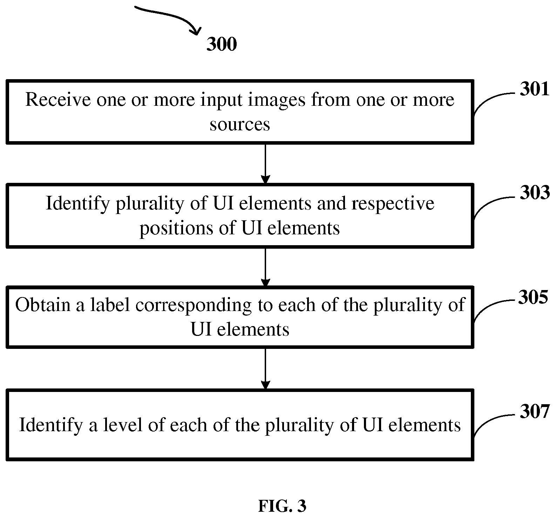

**FIG. 3** shows a flowchart illustrating a method of establishing a relationship between a plurality of User Interface (UI) elements in accordance with some embodiments of the present disclosure.

As illustrated in **FIG. 3****,** the method **300** includes one or more blocks illustrating a method for establishing a relationship between plurality of User Interface (UI) elements. The method **300** may be described in the general context of computer executable instructions. Generally, computer executable instructions can include routines, programs, objects, components, data structures, procedures, modules, and functions, which perform functions or implement abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At **block 301,** the method **300** includes receiving, by a processor **109** of the image processing system **107,** a plurality of input images related to one or more UI screens from one or more sources **103.** As an example, the one or more sources **103** may include, but not limited to, an image repository and an image capturing device such as a camera, a mobile, a tablet etc.

At **block 303,** the method **300** includes identifying, by the processor **109,** plurality of User Interface (UI) elements and respective positions of each of the plurality of UI elements. As an example, the plurality of UI elements may include, but not limited to, buttons, tabs, tables and text boxes. In some embodiments, the processor **109** identifies the positions of the plurality of UI elements by storing co-ordinates of the plurality of UI elements. In some embodiments, the processor **109** identifies the plurality of UI elements and the respective positions of the UI elements by using one or more methods described under the UI element identifying module **223** in the **FIG.2A****.**

At **block 305,** the method **300** includes, obtaining, by the processor **109,** a label corresponding to each of the plurality of UI elements. In some embodiments, the processor **109** initially obtains sub-images of each of the one or more input images by cropping regions of each of the plurality of UI elements. As an example, the sub-images may include, but not limited to, header regions of the plurality of UI elements. Upon obtaining the sub-images, the processor **109** extracts text from each sub-image to obtain the label corresponding to each of the plurality of UI elements.

At **block 307,** the method **300** includes, identifying by the processor **109,** a level of each of the plurality of UI elements. In some embodiments, the processor **109** initially sorts each of the plurality of UI elements identified in each of the one or more UI screens based on the respective positions. Sorting brings out relativity among the respective positions of each of the plurality of UI elements. The processor **109** assigns a value to each of the plurality of UI elements that indicates the respective positions in each of the plurality of input images based on the sorting. Upon sorting, the processor **109** identifies a common label in the one or more UI screens. Further, the processor **109** associates the plurality of UI elements present in the one or more UI screens based on the common label. Upon associating the plurality of UI elements, the processor **109** assigns a number to each of the plurality of UI elements based on the association. In some embodiments, the number assigned to each of the plurality of UI elements indicates the level of each of the plurality of UI elements, thereby establishing the relationship between the plurality of UI elements automatically.

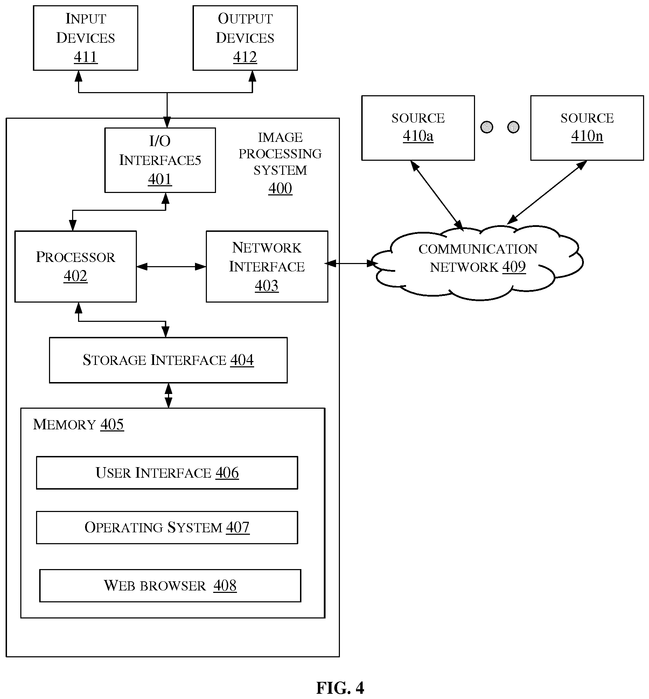

**FIG. 4** is a block diagram of an exemplary computer system for implementing embodiments consistent with the present disclosure.

In an embodiment, the image processing system **400** is used for establishing a relationship between plurality of User Interface (UI) elements. The image processing system **400** includes a central processing unit ("CPU" or "processor") **402.** The processor **402** may include at least one data processor for executing program components for executing user- or system-generated business processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with one or more input/output (I/O) devices (**411** and **412**) via I/O interface **401.** The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **401,** the image processing system **400** may communicate with one or more I/O devices (**411** and **412**).

In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.1 la/b/g/n/x, etc. Using the network interface **403** and the communication network **409,** the image processing system **400** may communicate with one or more sources **410 (a,..,n).** The communication network **409** can be implemented as one of the different types of networks, such as intranet or Local Area Network (LAN) and such within the organization. The communication network **409** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc. The one or more sources **410 (a,...,n)** may include, but not limited to, a an image repository and an image capturing device such as a camera, a mobile, a tablet etc. In some embodiments, the processor **402** may be disposed in communication with a memory **405** (e.g., RAM, ROM, etc. not shown in **Fig.4**) via a storage interface **404.** The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, user interface **406,** an operating system **407,** web browser **408** etc. In some embodiments, the image processing system **400** may store user/application data, such as the data, variables, records, etc. as described in this invention. Such databases may be implemented as fault-tolerant, relational, scalable, secure databases such as Oracle or Sybase.

The operating system **407** may facilitate resource management and operation of the image processing system **400.** Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), International Business Machines (IBM) OS/2, Microsoft Windows (XP, Vista/7/8, etc.), Apple iOS, Google Android, Blackberry Operating System (OS), or the like. User interface **406** may facilitate display, execution, interaction, manipulation, or operation of program components through textual or graphical facilities. For example, user interfaces may provide computer interaction interface elements on a display system operatively connected to the image processing system **400,** such as cursors, icons, check boxes, menus, scrollers, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the image processing system **400** may implement a web browser **408** stored program components. The web browser **408** may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the image processing system **400** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the image processing system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

### Advantages of the embodiment of the present disclosure are illustrated herein.

In an embodiment, the present disclosure provides a method and a system for establishing a relationship between a plurality of User Interface (UI) elements.

The present disclosure provides detailed insights related to each UI element in each input image related to a UI screen of an application.

The present disclosure establishes a parent-child relationship between the plurality of UI elements that helps in easy navigation within the UI screen and among the UI screens of the application.

The present disclosure requires minimal human intervention as most of the process is automated.

The present disclosure provides a feature where the plurality of UI elements are identified for any new application irrespective of historical data present in the image processing system.

A description of an embodiment with several components in communication with each other does not imply that all such components are required. On the contrary a variety of optional components are described to illustrate the wide variety of possible embodiments of the invention.

When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The specification has described a method and a system for establishing a relationship between plurality of User Interface (UI) elements. The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Finally, the language used in the specification has been principally selected for readability and instructional purposes. The scope of the invention is to be limited only by the claims. Accordingly, the embodiments of the present invention are illustrative, but not limiting, of the scope of the invention, which is set forth in the following claims.

## Claims

1. A method of establishing a hierarchical relationship between a plurality of User Interface, UI, elements, the method comprising:
receiving, by an image processing system (107), a plurality of input images related to a plurality of UI screens of an application from one or more sources (103);
identifying, by the image processing system (107), the plurality of UI elements and respective positions of the plurality of UI elements in each of the input images;
obtaining, by the image processing system (107), a label corresponding to each of the plurality of UI elements in each of the input images, wherein obtaining the label comprises:
obtaining sub-images of each of the input images by cropping regions of each of the plurality of UI elements; and extracting text from each sub-image; and
determining, by the image processing system (107), a level corresponding to a number for automatically establishing the hierarchical relationship between the plurality of UI elements for each of the plurality of UI elements identified in each of the plurality of UI screens, by
sorting, by the image processing system (107), each of the plurality of UI elements identified in each of the plurality of UI screens based on the respective positions of the plurality of UI elements in each of the plurality of UI screens;
identifying an in-common label corresponding to two or more of the plurality of UI elements present in two or more UI screens related to the plurality of input images, wherein the UI elements having an in-common label correspond to UI elements having a same label in different UI screens;
associating the plurality of UI elements having a corresponding in-common label together; and assigning, a number to each of the plurality of UI elements based on the sorting and the association, wherein the number indicates the level of each of the plurality of UI elements.

2. The method as claimed in claim 1, further comprising:
displaying, by the image processing system (107), the plurality of UI elements, the respective positions of the plurality of UI elements, the label corresponding to each of the plurality of UI elements and the level of each of the plurality of UI elements on a user interface (111) associated with the image processing system (107); and
updating, by the image processing system (107), dynamically, the plurality of UI elements, the respective positions of the plurality of UI elements, the label corresponding to each of the plurality of UI elements and the level of each of the plurality of UI elements on receiving one or more inputs from a user.

3. The method as claimed in claim 1, or 2, wherein the plurality of UI elements is at least one of buttons, tabs, tables, or text boxes.

4. An image processing system (107) for establishing a hierarchical relationship between a plurality of User Interface, UI, elements, the image processing system (107) comprising:
a processor (109); and
a memory (113) communicatively coupled to the processor (109), wherein the memory (113) stores processor-executable instructions, which, when executed by the processor (109), cause the processor (109) to perform the method of any preceding claim.

5. A non-transitory computer readable medium including instructions stored thereon that when executed by at least one processor (109) cause an image processing system (107) to perform operations comprising the method of any of claims 1 - 3.

## Patentansprüche

1. Verfahren zur Erzeugung einer hierarchischen Beziehung zwischen einer Mehrzahl von Elementen einer Benutzeroberfläche, UI, wobei das Verfahren folgendes umfasst:
durch ein Bildverarbeitungssystem (107), Empfangen einer Mehrzahl von Eingangsbildern in Bezug auf eine Mehrzahl von UI-Bildschirmen einer Applikation von einer oder mehreren Quellen (103);
durch das Bildverarbeitungssystem (107), Identifizieren der Mehrzahl von UI-Elementen und entsprechenden Positionen der Mehrzahl von UI-Elementen in jedem der Eingangsbilder;
durch das Bildverarbeitungssystem (107), Erhalten einer Kennzeichnung, die jedem der Mehrzahl von UI-Elementen in jedem der Eingangsbilder entspricht, wobei das Erhalten der Kennzeichnung folgendes umfasst:
Erhalten von Teilbildern jedes der Eingangsbilder durch Beschneidung von Bereichen jedes der Mehrzahl von UI-Elementen; und
Extrahieren von Text aus jedem Teilbild; und
durch das Bildverarbeitungssystem (107), Bestimmen einer Stufe, die einer Nummer zur automatischen Erzeugung der hierarchischen Beziehung zwischen der Mehrzahl von UI-Elementen für jedes der in jedem der Mehrzahl von UI-Bildschirmen identifizierten Mehrzahl von UI-Elementen entspricht;
durch das Bildverarbeitungssystem (107), Sortieren jedes der Mehrzahl von in jedem der Mehrzahl von UI-Bildschirmen identifizierten UI-Elementen auf der Basis der entsprechenden Positionen der Mehrzahl von UI-Elementen in jedem der Mehrzahl von UI-Bildschirmen;
Identifizieren einer gemeinsamen Kennzeichnung, die zwei oder mehr der Mehrzahl von UI-Elementen entspricht, die in zwei oder mehr UI-Bildschirmen in Bezug auf die Mehrzahl von Eingangsbildern vorhanden sind, wobei die UI-Elemente, die eine gemeinsame Kennzeichnung aufweisen, UI-Elementen entsprechen, die in verschiedenen UI-Bildschirmen eine gleiche Kennzeichnung aufweisen;
Zuordnen der Mehrzahl von UI-Elementen mit einer gemeinsamen Kennzeichnung zueinander; und
Zuordnen einer Nummer zu jedem der Mehrzahl von UI-Elementen auf der Basis der Sortierung und der Zuordnung, wobei die Nummer die Stufe jedes der Mehrzahl von UI-Elementen anzeigt.

2. Verfahren nach Anspruch 1, ferner umfassend:
durch das Bildverarbeitungssystem (107), Anzeigen der Mehrzahl von UI-Elementen, der entsprechenden Positionen der Mehrzahl von UI-Elementen, der Kennzeichnung, die jedem der Mehrzahl von UI-Elementen entspricht, und der Stufe jedes der Mehrzahl von UI-Elementen auf einer Benutzeroberfläche (111), die dem Bildverarbeitungssystem (107) zugeordnet ist; und
durch das Bildverarbeitungssystem (107), dynamisches Aktualisieren der Mehrzahl von UI-Elementen, der entsprechenden Positionen der Mehrzahl von UI-Elementen, der Kennzeichnung, die jedem der Mehrzahl von UI-Elementen entspricht, und der Stufe jedes der Mehrzahl von UI-Elementen beim Empfang einer oder mehrerer Eingaben von einem Benutzer.

3. Verfahren nach Anspruch 1 oder 2, wobei die Mehrzahl von UI-Elementen mindestens eines der folgenden ist: Schaltflächen, Tabs, Tabellen oder Textfelder.

4. Bildverarbeitungssystem (107) zur Erzeugung einer hierarchischen Beziehung zwischen einer Mehrzahl von Elementen einer Benutzeroberfläche, UI, wobei das Bildverarbeitungssystem (107) folgendes umfasst:
einen Prozessor (109); und
einen Speicher (113), der kommunikationsfähig mit dem Prozessor (109) gekoppelt ist, wobei der Speicher (113) durch den Prozessor ausführbare Anweisungen speichert, die, wenn sie durch den Prozessor (109) ausgeführt werden, bewirken, dass der Prozessor (109) das Verfahren nach einem der vorstehenden Ansprüche ausführt.

5. Nichtflüchtiges, computerlesbares Speichermedium, das darauf gespeicherte Anweisungen umfasst, die, wenn sie durch mindestens einen Prozessor (109) ausgeführt werden, bewirken, dass ein Bildverarbeitungssystem (107) Operationen ausführt, die das Verfahren nach einem der Ansprüche 1 bis 3 umfassen.

## Revendications

1. Procédé pour établir une relation hiérarchique entre une pluralité d'éléments d'interface utilisateur, UI, le procédé comprenant les étapes consistant à :
recevoir, par un système de traitement d'images (107), une pluralité d'images d'entrée associées à une pluralité d'écrans UI d'une application provenant d'au moins une source (103) ;
identifier, par le système de traitement d'images (107), la pluralité d'éléments UI et les positions respectives de la pluralité d'éléments UI dans chacune des images d'entrée ;
obtenir, par le système de traitement d'images (107), une étiquette correspondant à chacun de la pluralité d'éléments UI dans chacune des images d'entrée, l'obtention de l'étiquette comprenant les étapes consistant à :
obtenir des sous-images de chacune des images d'entrée en recadrant les régions de chacun des éléments de la pluralité d'éléments UI ; et
extraire du texte de chaque sous-image ; et
déterminer, par le système de traitement d'images (107), un niveau correspondant à un numéro permettant d'établir automatiquement la relation hiérarchique entre la pluralité d'éléments UI pour chacun de la pluralité d'éléments UI identifiés dans chacun de la pluralité d'écrans UI, par les étapes consistant à :
trier, par le système de traitement d'images (107), chacun de la pluralité d'éléments UI identifiés dans chacune de la pluralité d'écrans UI en fonction des positions respectives de la pluralité d'éléments UI dans chacune des pluralités d'écrans UI ;
identifier une étiquette en commun correspondant à deux ou plusieurs de la pluralité d'éléments UI présents dans deux ou plusieurs écrans UI associés à la pluralité d'images d'entrée, les éléments UI ayant une étiquette en commun correspondant aux éléments UI ayant une même étiquette dans différents écrans UI ;
associer la pluralité d'éléments UI ayant une étiquette en commun correspondante ; et
attribuer un numéro à chacun des éléments de la pluralité d'éléments UI en fonction du tri et de l'association, le numéro indiquant le niveau de chacun de la pluralité d'éléments UI.

2. Procédé selon la revendication 1, comprenant en outre les étapes consistant à :
afficher, par le système de traitement d'images (107), la pluralité d'éléments UI, les positions respectives de la pluralité d'éléments UI, l'étiquette correspondant à chacun de la pluralité d'éléments UI et le niveau de chacun de la pluralité d'éléments UI sur une interface utilisateur (111) associée au système de traitement d'images (107) ; et
mettre à jour, par le système de traitement d'images (107), de manière dynamique, la pluralité d'éléments UI, les positions respectives de la pluralité d'éléments UI, l'étiquette correspondant à chacun de la pluralité d'éléments UI et le niveau de chacun de la pluralité d'éléments UI à la réception d'au moins une entrée d'un utilisateur.

3. Procédé selon la revendication 1 ou 2, la pluralité d'éléments UI étant des boutons, des onglets, des tableaux et/ou des zones de texte.

4. Système de traitement d'images (107) pour établir une relation hiérarchique entre une pluralité d'éléments d'interface utilisateur, UI, le système de traitement d'images (107) comprenant :
un processeur (109) ; et
une mémoire (113) accouplée de manière communicative au processeur (109), la mémoire (113) stockant des instructions exécutables par processeur, qui, lorsqu'elles sont exécutées par le processeur (109), amènent le processeur (109) à effectuer le procédé selon l'une quelconque des revendications précédentes.

5. Support lisible par ordinateur non transitoire comprenant des instructions stockées sur celui-ci qui, lorsqu'elles sont exécutées par au moins processeur, (109) amènent un système de traitement d'images (107) à effectuer des opérations comprenant le procédé selon l'une quelconque des revendications 1 à 3.
